# EUROPÄISCHE PATENTSCHRIFT

(11) **EP 1 335 148 B1**
(45) Veröffentlichungstag und Bekanntmachung des Hinweises auf die Patenterteilung: **26.09.2007**
(21) Anmeldenummer: 03002982.1
(22) Anmeldetag: 11.02.2003
(51) Int. Cl.: F16F 1/373

(54) **Stützkörper, insbesondere zur elastischen Abstützung eines Sitz- oder Liegeelements**
Supporting body, in particular for elastically supporting a sitting or lying furniture
Corps de soutien, en particulier pour le support élastique d'un meuble d'assise ou de couchage

(30) Priorität: 11.02.2002 DE 20202050 U
(43) Veröffentlichungstag der Anmeldung: 13.08.2003
(73) Patentinhaber: Diemer & Dr. Jaspert GbR, 85630 Grasbrunn (DE)
(72) Erfinder: Diemer, Gregor, 85456 Wartenberg (DE); Heidinger, Florian Dr., 83627 Warngau (DE); Jaspert, Bodo Dr., 85630 Neukeferloh (DE); Jereb, Edwin, 86556 Kühbach (DE)
(74) Vertreter: Manitz, Finsterwald & Partner GbR

(56) Entgegenhaltungen:
- EP-A- 1 122 457
- DE-A- 2 015 659
- DE-U- 29 712 721
- GB-A- 2 032 051
- US-A- 6 113 082

## Beschreibung

Die vorliegende Erfindung betrifft einen Stützkörper, insbesondere zur elastischen Abstützung eines Sitz- oder Liegeelementes, mit einem insbesondere einstückig aus Kunststoff hergestellten Federelement mit einer in Bezug auf die Federachse oberen Stützfläche, einer unteren Stützfläche und mindestens zwei von der oberen Stützfläche zur unteren Stützfläche verlaufenden, elastischen Federstreben, die zwischen oberer Stützfläche und unterer Stützfläche jeweils mindestens einmal derart abgewinkelt oder gebogen ausgebildet sind, dass sie sich ausgehend von der unteren Stützfläche zunächst in eine erste zur Federachse geneigte Richtung und dann in eine zweite zur Federachse zumindest im Wesentlichen entgegengesetzt geneigte Richtung erstrecken.

Derartige Stützkörper werden beispielsweise als Teil einer Untermatratze mit einer Vielzahl von über mindestens einen Teil der Untermatratze verteilt angeordneten, voneinander unabhängigen derartigen Stützkörpern zur Abstützung einer Obermatratze oder als Federkern einer Obermatratze eingesetzt. In Untermatratzen ersetzen sie in den entsprechenden Bereichen die herkömmlichen Federleisten und haben den Vorteil eine quasi punktelastische Abstützung zu ermöglichen.

Ein Stützkörper dieser Art ist beispielsweise aus der DE 100 04 015.2 bekannt. Das Federelement dieses bekannten Stützkörpers hat den Vorteil, dass sich die oberen und unteren Enden der Federstreben aufgrund ihrer abgewinkelten oder gebogenen Ausbildung in Federrichtung betrachtet bei Belastung des Federelementes nicht voneinander entfernen. Das heißt, die Projektion des oberen Endes jeder Federstrebe auf die Ebene des unteren Endes ändert sich bei Belastung des Federelementes praktisch nicht. Dies hat den Vorteil, dass keine Relativverschiebung der Federstrebenenden quer zur Federachse auftritt, so dass zwischen den Federstrebenenden und einem von diesen abgestützen Gegenstand keine Reibung entsteht. Ein weiterer Vorteil besteht darin, dass die Federstrebenenden eines Federelementes fest miteinander verbunden werden können, beispielsweise zu einer Kopfplatte oder Kopfplattenaufnahme, da sie sich bei Belastung des Federelementes nicht voneinander entfernen.

Das Federelement des zuvor genannten bekannten Stützkörpers hat außerdem den Vorteil, dass es aufgrund seiner speziellen Ausgestaltung trotz des Vorhandenseins von drei oder mehr um die Federachse verteilt angeordneter Federstreben hinterschnittfrei ausgebildet, also einfach einstückig herstellbar ist. Ein gewisser Nachteil besteht jedoch darin, dass die Formhälften zur Entformung quer zur Federachse bewegt werden müssen und sich verhältnismäßig lange Taktzeiten ergeben. Auch ist die Resthöhe des Federelementes bei vollständiger Kompression aufgrund des sich Übereinanderlegens der in entgegengesetzte Richtungen geneigten Abschnitte der Federstreben noch verhältnismäßig groß

Ein weiterer Stützkörper gemäß dem Oberbegriff von Anspruch 1 ist aus der US-A-6 113 082 bekannt, welche als nächstliegender Stand der Technik angesehen wird.

Der Erfindung liegt die Aufgabe zugrunde, einen Stützkörper der genannten Art anzugeben, welcher diese Nachteile nicht aufweist. Insbesondere soll die verbleibende Resthöhe verringert und die Entformbarkeit des Federelementes verbessert werden.

Diese Aufgabe wird dadurch gelöst, dass der in die erste Richtung geneigte Abschnitt und der in die zweite Richtung geneigte Abschnitt einer Federstrebe die obere Stützfläche und die untere Stützfläche in Federrichtung betrachtet vollständig nebeneinander angeordnet sind, so dass sie sich nicht gegenseitig verdecken.

Durch die vollständig nebeneinander gelegene Anordnung der in entgegengesetzte Richtungen geneigten Abschnitte der Federstreben und der Stützflächen des Federelementes liegen diese bei vollständiger Kompression des Federelementes nicht aufeinander, sondern kommen nebeneinander zu liegen. Die verbleibende Resthöhe des Federelementes bei vollständiger Kompression ist dadurch gegenüber den Federelementen bekannter Stützkörper verringert. Zudem ermöglicht diese Ausgestaltung die Ausbildung eines in Federrichtung hinterschnittfreien Federelementes. Dies ermöglicht eine einfache Entformung mit kurzen Taktzeiten.

Werden die entgegengesetzt geneigten Abschnitte der Federstreben jeweils im Wesentlichen gleich lang ausgebildet, kann ein Versetzen der Federstrebenenden quer zur Federachse zumindest weitgehend vermieden werden. Es tritt daher keine Reibung zwischen den Federstrebenenden und einer von diesen beispielsweise abgestützten Matratze auf. Die Federstrebenenden können bei einer solchen Ausgestaltung auch fest miteinander verbunden werden, beispielsweise über eine Kopfplatte oder eine Kopfplattenaufnahme.

Die Federstrebenabschnitte bzw. ihre Projektionen auf die untere oder obere Stützfläche verlaufen bevorzugt zumindest annähernd radial zur Federachse. Sie oder ihre Projektionen können aber auch tangential zur Federachse verlaufen. Die zuerst genannte Variante ermöglicht eine besonders gleichmäßige Verteilung der Federstreben um die Federachse, während die zweite Variante eine spiegelsymmetrische Anordnung um eine die Federachse enthaltende Ebene erlaubt.

Die entgegengesetzt geneigten Abschnitte einer Federstrebe bzw. ihre Projektionen auf die untere oder obere Stützfläche können nach einer Ausgestaltung der Erfindung parallel zueinander verlaufen. Dies ermöglicht bei tangentialer Anordnung der Federstreben einen kompakten Aufbau des Federelementes

Nach einer anderen Ausgestaltung können die entgegengesetzt geneigten Abschnitte der Federstreben bzw. ihre Projektionen auf die untere oder obere Stützfläche einen Winkel kleiner 90° miteinander einschließen. Dies ermöglicht bei annähernd radial verlaufenden Federstreben ein Verbinden der Federstrebenenden zweier benachbarter Federstreben.

Die Federstrebenenden laufen nach einer weiteren Ausgestaltung der Erfindung auf einer Seite des Federelementes frei aus und bilden jeweils einen Stützflächenabschnitt. Die gesamte Stützfläche auf einer Seite des Federelementes kann so einfach durch die Federstrebenenden gebildet werden. Die Stützflächenabschnitte könne beispielsweise durch Platten gebildet werden, in welche die freien Enden der Federstreben münden.

Des Weiteren ist es bevorzugt, wenn die freien Enden zweier benachbarter Federstreben jeweils gemeinsam einen Stützflächenabschnitt bilden. Daraus resultieren ein stabiler Aufbau und gute Abstützeigenschaften.

Nach einer weiteren Ausgestaltung der Erfindung, die auch für sich beansprucht wird, weisen die Federstrebenenden, insbesondere an diese angeformte Mittel zur Verbindung mit einer Kopf- oder Fußplatte auf. Gemäß dieser Ausgestaltung wird die Kopf- oder Fußplatte selbst also nicht angeformt, sondern separat hergestellt. Dies ermöglicht die Verwendung verschiedener Materialien und vereinfacht die Herstellung. Die Verbindung der Federstrebenenden mit einer Kopf- oder Fußplatte erhöht außerdem die Stabilität des Federelementes.

Eine hohe Kippstabilität ergibt sich, wenn die Federstreben, nach einer Ausgestaltung der Erfindung, im Wesentlichen gleichmäßig um die Federachse verteilt angeordnet sind. Außerdem kann die Kippstabilität erhöht werden, indem vier oder mehr Federstreben vorgesehen sind.

Nach noch einer Ausgestaltung der Erfindung sind jeweils zwei an ihren Enden miteinander verbundene Federstreben spiegelsymmetrisch zu einer die Federachse nicht schneidenden Ebene angeordnet. Eine etwa bei Kompression des Federelements auftretende Torsion einer Federstrebe oder sonstige Verdrehung quer zur Federrichtung kann so durch die entgegen gesetzte Torsion oder Verdrehung der zugeordneten spiegelsymmetrischen Federstrebe ausgeglichen werden.

Weitere Vorteile und vorteilhafte Ausgestaltungen ergeben sich aus der nachfolgenden Beschreibung und zeichnerischen Darstellung von Ausführungsbeispielen der Erfindung sowie den Ansprüchen. Dabei zeigen, jeweils in schematischer Darstellung,
- Fig. 1: eine perspektivische Darstellung eines ersten Federelementes eines erfindungsgemäßen Stützkörpers,
- Fig. 2: eine Draufsicht in Federrichtung auf das Federelement von Fig. 1,
- Fig. 3: eine Seitenansicht quer zur Federachse auf das Federelement von Fig. 1
- Fig. 4: eine perspektivische Ansicht des Federelementes eines weiteren erfindungsgemäßen Stützkörpers,
- Fig. 5: eine Draufsicht in Federrichtung auf das Federelement von Fig. 4,
- Fig. 6: eine Seitenansicht quer zur Federrichtung auf das Federelement von Fig. 4, und
- Fig. 7: eine gegenüber Fig. 6 um 90° gedrehte Seitenansicht quer zur Federrichtung auf das Federelement von Fig. 4.

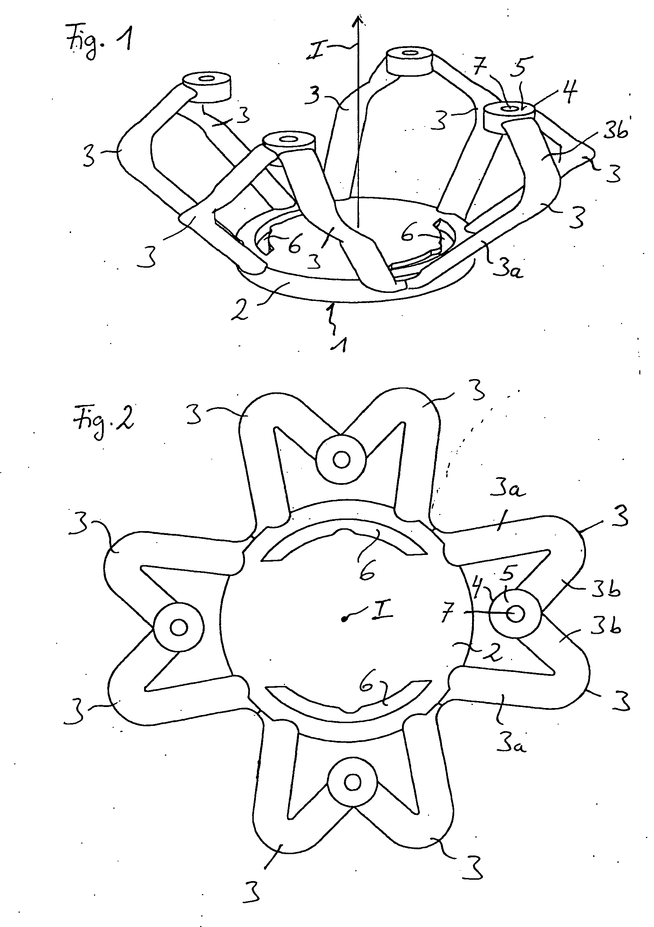

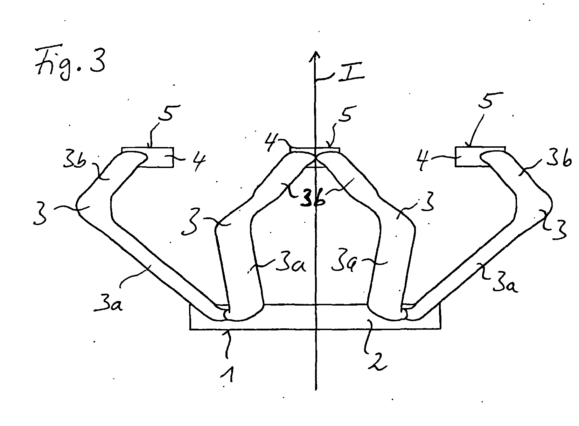

Das in den Fig. 1 bis 3 dargestellte Federelement weist eine in Federrichtung I betrachtet untere Stützfläche 1 auf, die durch eine kreisförmige Platte 2 gebildet wird. An die insbesondere aus Kunststoff bestehende Platte 2 sind randseitig jeweils mit ihrem einen Ende acht Federstreben 3 angeformt, deren anderes Ende jeweils in eine von vier kreisförmigen Platten 4 mündet, die gemeinsam eine in Federrichtung I betrachtet obere Stützfläche 5 bilden. Die untere Platte 2 weist außerdem Ausnehmungen 6 auf, die zur Verbindung mit einer nicht dargestellten Fußplatte oder einem Träger ausgebildet sind. Die oberen Platten 4 weisen ebenfalls Ausnehmungen 7 zur Verbindung mit einer hier nicht dargestellten Kopfplatte auf.

Die Federstreben 3 erstrecken sich ausgehend von der unteren Platte 2 zunächst mit einem ersten Abschnitt 3a schräg nach außen und oben und anschließend mit einem zweiten Abschnitt 3b schräg nach oben und nach innen zurück. Der erste Abschnitt 3a ist von der Federachse I also weg geneigt, der zweite Abschnitt 3b jeweils auf die Federachse I zu geneigt, und beide bzw. ihr Projektionen auf die Ebene der Stützfläche 1 verlaufen annähernd radial zur Federachse I.

Der Verlauf der Federstreben 3 ist dabei so, dass ihr erster Abschnitt 3a und ihr zweiter Abschnitt 3b in Federrichtung I betrachtet vollständig nebeneinander verlaufen, sich also nicht gegenseitig verdecken. Und zwar verlaufen die beiden Abschnitte 3a und 3b in der Projektion auf die Ebene der unteren Stützfläche 1 in einem Winkel α < 90°, im dargestellten Beispiel von ca. 40° zueinander. Die Winkel α benachbarter Federstreben 3 weisen zueinander umgekehrtes Vorzeichen auf, so dass die oberen Abschnitte 3b benachbarter Federstreben 3 abwechselnd aufeinander zu und voneinander weg verlaufen. Jeweils zwei aufeinander zu laufende obere Abschnitte 3b münden in eine gemeinsame obere Platte 4. Auf diese Weise wird ein Federelement mit um die Federachse I gleichmäßig verteilten Federstreben 3 und oberen Platten 4 erhalten.

Wie man sieht, sind die Längen der unteren Federstreben 3a und der oberen Federstreben 3b im Verhältnis zueinander so gewählt, dass die oberen Abschnitte 3b der Federstreben 3 und die diesen zugeordneten oberen Platten 4 in Federrichtung I betrachtet die untere Platte 2 nicht überdecken. Das heißt, die oberen Abschnitte 3b der Federstreben 3 sind etwas kürzer als die unteren Abschnitte 3a. Da sich zudem die Federstrebenabschnitte 3a und 3b in Federrichtung I betrachtet nicht gegenseitig verdecken, resultiert ein in Federrichtung I hinterschnittfreies Federelement, welches in Federrichtung I einfach entformbar ist. Das dargestellte Federelement kann daher kostengünstig einstückig hergestellt werden.

Außerdem ist erkennbar, dass die beiden über eine gemeinsame obere Platte 4 miteinander verbundenen Federstreben 3 jeweils spiegelsymmetrisch zu einer die Federachse I enthaltenden Ebene verlaufen. Eine bei Kompression des Federelementes auftretende Torsion der Federstreben 3 oder eine Verdrehung quer zur Federachse I der Federstrebenabschnitte 3a und 3b einer Federstrebe 3 gegeneinander wird so durch die entsprechende Torsion oder Verdrehung der mit dieser Federstrebe 3 verbundenen Federstrebe 3 ausgeglichen.

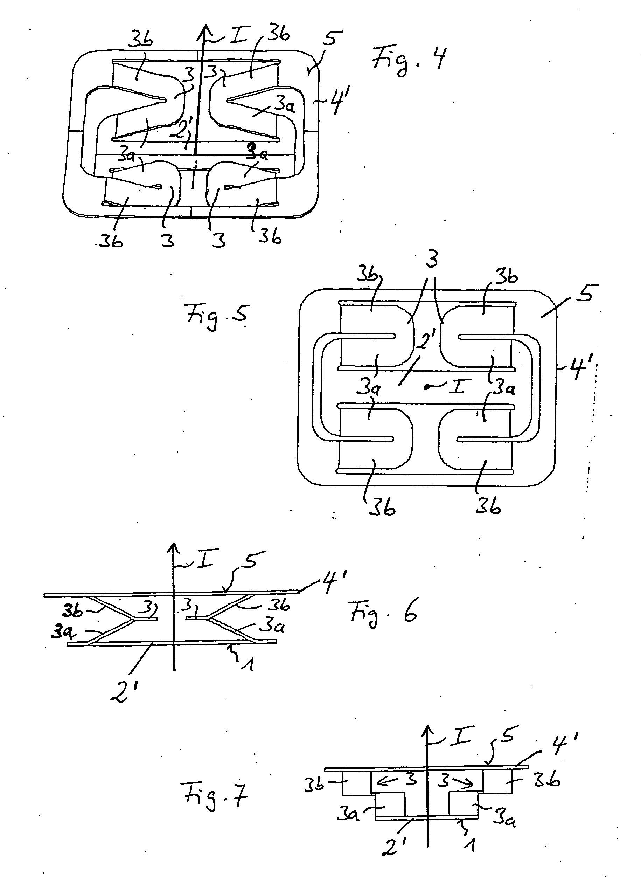

Bei der in den Fig. 4 bis 7 dargestellten Variante verlaufen die Federstreben 3 zwischen unterer Stützfläche 1 und oberer Stützfläche 5 tangential in Bezug auf die Federachse I. Die untere Stützfläche 1 ist durch eine langgestreckte rechteckige Platte 2' gebildet, in deren vier Eckbereichen die vier Federstreben 3 außen angeformt sind. Sie verlaufen mit beiden Abschnitten 3a und 3b parallel zur Längserstreckung der unteren Platte 2'. Auch hier verlaufen außerdem die unteren Abschnitte 3a und die oberen Abschnitte 3b der Federstreben 3 nebeneinander, so dass sich diese in Federrichtung I betrachtet nicht überdecken.

Das andere Ende der Federstreben 3 mündet in eine gemeinsame Deckplatte 4', die als Rechteckrahmen ausgebildet ist. Die Federstreben 3 münden jeweils im inneren Eckbereich dieses Rahmens 4. Auf diese Weise wird auch bei dieser Variante erreicht, dass sich weder die Federstrebenabschnitte 3a und 3b noch die obere Platte 4' und die untere Platte 2' gegenseitig überdecken, und auch nicht die Federstreben 3 einerseits und die Platten 2' und 4' andererseits. Auch dieses Federelement ist daher einfach in Federrichtung I entformbar. Durch die Anordnung der Federstreben 3 in den Eckbereichen der unteren Platte 2' und der oberen Platte 4' ist außerdem eine verhältnismäßig große Kippstabilität erreichbar.
Auch das Federelement gemäß der zweiten Variante ist bevorzugt aus Kunststoff hergestellt. Die in entgegengesetzte Richtungen geneigten Abschnitte 3a und 3b der Federstreben 3 können bei dieser Variante genau gleich lang ausgebildet sein, so dass so gut wie keine Relativverschiebung der Federstrebenenden bei Kompression auftritt. Außerdem verlaufen auch hier jeweils zwei Federstreben 3 spiegelsymmetrisch zu einer die Federachse I enthaltenden Ebene.

Es ergibt sich ein Stützkörper mit einem Federelement, welches einfach einstückig aus Kunststoff herstellbar ist. Aufgrund der treppenartig versetzten Anordnung der oberen Abschnitte 3b und der unteren Abschnitte 3a der Federstreben 3 sowie der auch im Übrigen nicht vorhandenen Überdeckung der Federelementteile ist eine einfache Entformung in Federrichtung I möglich. Dies ermöglicht kurze Taktzeiten bei der Herstellung. Durch die treppenartig versetzte Anordnung der Federstrebenabschnitte 3a und 3b ist zudem die Resthöhe des Federelementes bei vollständiger Kompression sehr gering. Sie wird nur durch die Materialstärke der Federstreben 3 und der Platten 2, 2' sowie 4, 4' bestimmt.

### Bezugszeichenliste

- 1: untere Stützfläche
- 2, 2': untere Platte
- 3: Federstrebe
- 3a: unterer Abschnitt von 3
- 3b: oberer Abschnitt von 3
- 4, 4': obere Platte
- 5: obere Stützfläche
- 6: Ausnehmung
- 7: Ausnehmung
- I: Federachse
- α: Winkel

## Patentansprüche

1. Stützkörper, insbesondere zur elastischen Abstützung eines Sitz-oder Liegeelementes, mit einem insbesondere einstückig aus Kunststoff hergestellten Federelement mit einer in Bezug auf die Federachse (I) oberen Stützfläche (5), einer unteren Stützfläche (1) und mindestens zwei von der oberen Stützfläche (5) zur unteren Stützfläche (1) verlaufenden, elastischen Federstreben (3), die zwischen oberer Stützfläche (5) und unterer Stützfläche (1) jeweils mindestens einmal derart abgewinkelt oder gebogen ausgebildet sind, dass sie sich ausgehend von der unteren Stützfläche (1) zunächst in eine erste zur Federachse (I) geneigte Richtung und dann in eine zweite zur Federachse (I) zumindest im Wesentlichen entgegengesetzt geneigte Richtung erstrecken,
**dadurch gekennzeichnet,**
**dass** der in die erste Richtung geneigte Abschnitt (3a) einer Federstrebe (3), der in die zweite Richtung geneigte Abschnitt (3b) einer Federstrebe (3), die obere Stützfläche (5) und die untere Stützfläche (1) in Federrichtung (I) betrachtet vollständig nebeneinander angeordnet sind, so dass sie sich nicht gegenseitig verdecken.

2. Stützkörper nach Anspruch 1,
**dadurch gekennzeichnet,**
**dass** die entgegengesetzt geneigten Abschnitte (3a, 3b) im Wesentlichen gleich lang sind.

3. Stützkörper nach Anspruch 1 oder 2,
**dadurch gekennzeichnet,**
**dass** die Abschnitte (3a, 3b) bzw. ihre Projektionen auf die untere oder obere Stützfläche (1, 5) zumindest annähernd radial oder im Wesentlichen tangential zur Federachse (I) verlaufen.

4. Stützkörper nach einem der vorhergehenden Ansprüche,
**dadurch gekennzeichnet,**
**dass** die beiden Abschnitte (3a, 3b) bzw. ihre Projektionen auf die untere oder obere Stützfläche (1, 5) parallel zueinander verlaufen oder einen Winkel kleiner 90° miteinander einschließen.

5. Stützkörper nach einem der vorhergehenden Ansprüche,
**dadurch gekennzeichnet,**
**dass** die Enden der Federstreben (3) auf einer Seite des Federelementes frei auslaufen und jeweils einen Stützflächenabschnitt (5) bilden, wobei die Stützflächenabschnitte (5) insbesondere durch Platten (4) gebildet werden, in welche die freien Enden der Federstreben (3) münden.

6. Stützkörper nach Anspruch 5,
**dadurch gekennzeichnet,**
**dass** die freien Enden zweier benachbarter Federstreben (3) jeweils gemeinsam einen Stützflächenabschnitt (5) bilden.

7. Stützkörper nach einem der vorhergehenden Ansprüche,
**dadurch gekennzeichnet,**
**dass** die Enden der Federstreben (3) auf einer Seite des Federelementes frei auslaufen und jeweils einen Stützflächenabschnitt (5) bilden und dass die freien Federstrebenenden insbesondere an diese angeformte Mittel (7) zur Verbindung mit einer Kopf- oder Fußplatte aufweisen.

8. Stützkörper nach einem der Ansprüche 1 bis 4,
**dadurch gekennzeichnet,**
**dass** jeweils beide Enden einer Federstrebe (3) in eine mit den anderen Federstreben (3) gemeinsame Stützfläche (1, 5) münden, wobei insbesondere die Federstreben (3) mit ihrem einen Ende jeweils außen in eine im Wesentlichen rechteckförmige Platte (2') und mit ihrem anderen Ende innen in eine rahmenförmig ausgebildete Platte (4') münden.

9. Stützkörper nach einem der vorhergehenden Ansprüche,
**dadurch gekennzeichnet,**
**dass** die Federstreben (3) im Wesentlichen gleichmäßig um die Federachse (I) verteilt angeordnet sind, wobei insbesondere vier oder mehr Federstreben (3) vorgesehen sind.

10. Stützkörper nach einem der vorhergehenden Ansprüche,
**dadurch gekennzeichnet,**
**dass** jeweils zwei an ihren Enden miteinander verbundene Federstreben (3) spiegelsymmetrisch zu einer die Federachse (I), nicht schneidenden Ebene angeordnet sind.

## Claims

1. Support body, in particular for the elastic support of a seat element or bed element, having a spring element which is in particular manufactured in one piece of plastic, with an upper support surface (5) and a lower support surface (1) in relation to the spring axis (I) and with at least two plastic spring braces (3) extending from the upper support surface (5) to the lower support surface (1) which are each angled or bent at least once between the upper support surface (5) and the lower support surface (1) so that they extend, starting from the lower support surface (1), in a first direction inclined to the spring axis (I) and then in a second direction, which is at least substantially oppositely inclined to the spring axis (I),
**characterized in that**
the section (3a) of a spring brace (3) inclined in the first direction, the section (3b) of a spring brace (3) inclined in the second direction, the upper support surface (5) and the lower support surface (1) are arranged completely alongside one another when considered in the spring direction (I), so that they do not mutually cover one another.

2. Support body in accordance with claim 1,
**characterized in that**
the oppositely inclined sections (3a, 3b) are essentially of the same length.

3. Support body in accordance with claim 1 or claim 2,
**characterized in that**
the sections (3a, 3b), i.e. their projections onto the lower or upper support surface (1, 5) extend at least approximately radially or essentially tangentially to the spring axis (I).

4. Support body in accordance with one of the preceding claims,
**characterized in that**
the two sections (3a, 3b), i.e. their projections onto the lower or upper support surface (1, 5) extend parallel to one another or include an angle smaller than 90° with one another.

5. Support body in accordance with one of the preceding claims,
**characterized in that**
the ends of the spring braces (3) run out freely at one side of the spring element and each form a support surface section (5), with the support surface sections (5) being in particular formed by plates (4) into which the free ends of the spring braces (3) merge.

6. Support body in accordance with claim 5,
**characterized in that**
the free ends of two adjacent spring braces each jointly form a support surface section (5).

7. Support body in accordance with one of the preceding claims,
**characterized in that**
the ends of the spring braces (3) run out freely at one side of the spring element and each form a support surface section (5) and **in that** the free spring brace ends in particular have means (7) formed onto them for the connection to a head plate or foot plate.

8. Support in accordance with one of the claims 1 to 4,
**characterized in that**
in each case both ends of a spring brace (3) open into a support surface (1, 5) common to the other spring brace (3), with the one end of the spring braces (3) respectively opening into a substantially rectangular plate (2') and with the other end opening inwardly into a plate (4') of a frame-like shape.

9. Support body in accordance with one of the preceding claims,
**characterized in that**
the spring braces (3) are distributed substantially uniformly about the spring axis (I), with four or more spring braces (3) being provided in particular.

10. Support body in accordance with one of the preceding claims,
**characterized in that**
in each case two spring braces (3), which are connected together at their ends, are arranged in mirror symmetry to a plane which does not intersect the spring axis (I).

## Revendications

1. Corps de soutien, en particulier pour le support élastique d'un meuble d'assise ou de couchage, comprenant un élément à ressort fabriqué en matière plastique, en particulier d'un seul tenant, avec une surface de support supérieure (5) par rapport à l'axe de ressort (I), une surface de support inférieure (1) et au moins deux entretoises à ressort élastiques (3) s'étendant depuis la surface de support supérieure (5) jusqu'à la surface de support inférieure (1), qui sont réalisées chacune de manière coudée ou cintrée au moins une fois entre la surface de support supérieure (5) et la surface de support inférieure (1) de telle façon que, en partant de la surface de support inférieure (1) elles s'étendent tout d'abord dans une première direction inclinée par rapport à l'axe de ressort (I) et ensuite dans une seconde direction inclinée au moins sensiblement de façon opposée par rapport à l'axe de ressort (I),
**caractérisé en ce que**
le tronçon (3a) d'une entretoise à ressort (3) incliné dans la première direction, le tronçon (3b) d'une entretoise à ressort (3) incliné dans la seconde direction, la surface de support supérieure (5) et la surface de support inférieure (1), considérés dans la direction de l'axe de ressort (I), sont agencés en totalité les un(e)s à côté des autres, de sorte qu'ils(elles) ne se recouvrent pas mutuellement.

2. Corps de soutien selon la revendication 1,
**caractérisé en ce que** les tronçons (3a, 3b) inclinés en directions opposées ont essentiellement la même longueur.

3. Corps de soutien selon la revendication 1 ou 2,
**caractérisé en ce que** les tronçons (3a, 3b) ou respectivement leurs projections sur la surface de support inférieure ou supérieure (1, 5) s'étendent au moins approximativement radialement ou sensiblement tangentiellement par rapport à l'axe de ressort (I).

4. Corps de soutien selon l'une des revendications précédentes,
**caractérisé en ce que** les deux tronçons (3a, 3b) ou respectivement leurs projections sur la surface de support inférieure ou supérieure (1, 5) s'étendent parallèlement l'un(e) à l'autre ou définissent l'un(e) avec l'autre un angle inférieur à 90°.

5. Corps de soutien selon l'une des revendications précédentes,
**caractérisé en ce que** les extrémités des entretoises à ressort (5) se terminent librement sur un côté de l'élément à ressort et forment respectivement un tronçon de surface de support (5), les tronçons de surface de support (5) étant en particulier formés par des plaques (4) dans lesquelles débouchent les extrémités libres des entretoises à ressort (3).

6. Corps de soutien selon la revendication 5,
**caractérisé en ce que** les extrémités libres de deux entretoises à ressort (3) voisines forment respectivement conjointement un tronçon de surface de support (5).

7. Corps de soutien selon l'une des revendications précédentes,
**caractérisé en ce que** les extrémités des entretoises à ressort (3) se terminent librement sur un côté de l'élément à ressort et forment respectivement un tronçon de surface de support (5), et **en ce que** les extrémités libres des entretoises à ressort comportent des moyens (7), en particulier conformés sur ces extrémités, pour la liaison avec une plaque de tête ou de pied.

8. Corps de soutien selon l'une des revendications 1 à 4,
**caractérisé en ce que** les deux extrémités respectives d'une entretoise à ressort (3) débouchent dans une surface de support (1, 5) commune avec les autres entretoises à ressort (3), les entretoises à ressort (3) débouchant en particulier par l'une de leurs extrémités à l'extérieur dans une plaque (2') sensiblement rectangulaire et par leur autre extrémité à l'intérieur dans une plaque (4') réalisée en forme de cadre.

9. Corps de soutien selon l'une des revendications précédentes,
**caractérisé en ce que** les entretoises à ressort (3) sont agencées sensiblement en répartition régulière autour de l'axe de ressort (I), et **en ce qu'**il est prévu en particulier quatre entretoises à ressort (3) ou plus.

10. Corps de soutien selon l'une des revendications précédentes,
**caractérisé en ce que** deux entretoises à ressort (3) respectives reliées l'une à l'autre à leurs extrémités sont agencées symétriquement par rapport à un plan qui ne recoupe pas l'axe de ressort (I).
